# EUROPEAN PATENT SPECIFICATION

(11) **EP 4 385 826 B1**
(45) Date of publication and mention of the grant of the patent: **11.06.2025**
(21) Application number: 22213607.9
(22) Date of filing: 14.12.2022
(51) Int. Cl.: B60R 16/02, B60R 13/08

(54) **FEEDTHROUGH ASSEMBLY FOR GUIDING AT LEAST ONE CABLE AND/OR AT LEAST ONE CONDUIT THROUGH AN OPENING IN A WALL PART OF A MOTOR COMPARTMENT OF A VEHICLE, PARTITION WALL ASSEMBLY, VEHICLE AND METHOD**
DURCHFÜHRUNGSANORDNUNG ZUM FÜHREN MINDESTENS EINES KABELS UND/ODER MINDESTENS EINER LEITUNG DURCH EINE ÖFFNUNG IN EINEM WANDTEIL EINES KRAFTFAHRZEUGS
ENSEMBLE DE PASSAGE POUR GUIDER AU MOINS UN CÂBLE ET/OU AU MOINS UN CONDUIT À TRAVERS UNE OUVERTURE DANS UNE PARTIE DE PAROI D'UN COMPARTIMENT MOTEUR D'UN VÉHICULE

(43) Date of publication of application: 19.06.2024
(73) Proprietor: Volvo Car Corporation, 405 31 Göteborg (SE)
(72) Inventor: HOGLAND, Jenni, 40531 Göteborg (SE); HELLGREN, Martin, 40531 Göteborg (SE)
(74) Representative: Maiwald GmbH

(56) References cited:
- WO-A2-97/31415
- DE-A1- 102008 020 306
- GB-A- 2 448 049
- US-A- 4 912 287
- US-A1- 2011 127 730
- US-B2- 6 951 263

## Description

The present disclosure relates to a feedthrough assembly for guiding at least one cable and/or at least one conduit through an opening in a wall part of a motor compartment of a vehicle.

The present disclosure is further directed to a partition wall assembly for separating a motor compartment of a vehicle from a passenger compartment of the vehicle.

Additionally, the present disclosure is directed to a vehicle having such a partition wall.

The present disclosure also relates to a method for guiding at least one cable and/or at least one conduit through an opening in a wall part of a motor compartment of a vehicle.

Such feedthrough assemblies are generally known. They fulfill not only the function of mechanically holding the at least one cable and/or the at least one conduit in place, but also the function of separating one side of the wall part with respect to the other side of the wall part. The separation generally has to withstand noise, dust and humidity. In other words, the feedthrough assembly needs to seal the opening in the wall part with respect to noise, dust and humidity. At the same time, feedthrough assemblies shall be produced in a cost-efficient manner. Feedthrough parts are for example known from GB 2 448 049 A, WO 97/31415 A2 and US 4 912 287 A.

This leads to a conflict of objectives between a reliable sealing functionality and costs of production.

It is therefore an objective of the present disclosure to provide a feedthrough assembly offering a reliable sealing functionality and being cost-efficient at the same time.

The problem is at least partially solved or alleviated by the subject matter of the independent claims of the present disclosure, wherein further examples are incorporated in the dependent claims.

According to a first aspect, there is provided a feedthrough assembly for guiding at least one cable and/or at least one conduit through an opening in a wall part of a motor compartment of a vehicle. The feedthrough assembly comprises a first feedthrough part comprising a first component and a second component, wherein the first component and the second component form an integral portion of the first feedthrough part. An elasticity of the second component of the first feedthrough part is higher than an elasticity of the first component of the first feedthrough part. Moreover, the feedthrough assembly comprises a second feedthrough part comprising a first component and a second component, wherein the first component and the second component form an integral portion of the second feedthrough part. An elasticity of the second component of the second feedthrough part is higher than an elasticity of the first component of the second feedthrough part. The feedthrough assembly also comprises at least one feedthrough channel being arranged on at least one of the first feedthrough part and the second feedthrough part. In other words, the feedthrough assembly comprises two parts, i.e. the first feedthrough part and the second feedthrough part. Each of the first feedthrough part and the second feedthrough part comprises two components having different elasticities. The first component and the second component of the first feedthrough part form integral portions of the first feedthrough part. In the same manner, the first component and the second component of the second feedthrough part form integral portions of the second feedthrough part. Consequently, the feedthrough assembly, especially the first feedthrough part and the second feedthrough part, is mechanically stable due to the first component of the first feedthrough part and the first component of the second feedthrough part. These components have a comparatively low elasticity. In other words, these components are relatively rigid. This has the effect, that the at least one cable and/or the at least one conduit may be reliably held in place by the feedthrough assembly. The second component of the first feedthrough part and the second component of the second feedthrough part have a comparatively high elasticity. Consequently, these components offer the ability to reliably seal the feedthrough assembly with respect to the wall part and/or with respect to the at least one cable and/or the at least one conduit. This has the effect that the feedthrough assembly may reliably seal the opening of the wall part against dust, noise and humidity while at the same time guiding the at least one cable and the at least one conduit through the opening.

In an example, both the first feedthrough part and the second feedthrough part are made from plastics material. In this context, both the first feedthrough part and the second feedthrough part may be injection molded parts. More precisely, the first feedthrough part and the second feedthrough part may be two-component (2K) injection molded parts. This constitutes a cost-efficient way to produce the first feedthrough part and the second feedthrough part.

For the present disclosure, a cable is to be understood as any lengthy means being configured for transmitting an electric signal, be it a power signal or a control signal. A conduit is to be understood in a broad sense such that it covers all types of ducts, pipes and hoses.

Since the wall part needs to delimit the motor compartment such that noise, dust and community may not leave the motor compartment through the wall part, the wall part may also be called an NVH wall part, wherein the term NVH stands for noise, vibration and harshness.

In an example, a first circumferential section of the at least one feedthrough channel is formed by the first feedthrough part and a second circumferential section of the at least one feedthrough channel is formed by the second feedthrough part. In a special case, the first circumferential section and the second circumferential add up to the entire circumference of the at least one feedthrough channel. A configuration, wherein both the first feedthrough part and the second feedthrough part form a section of the feedthrough channel facilitates arranging a cable and/or a conduit in the feedthrough channel. This is the case since one of the first feedthrough part and the second feedthrough part may be installed on the wall part in a first step. Subsequently, the cable or conduit may be arranged in the portion of the feedthrough channel being provided by the first feedthrough part. Since the second feedthrough part has not been mounted yet, the portion of the feedthrough channel being provided by the first feedthrough part is easily accessible in order to arrange the cable or conduit. Subsequently, the second feedthrough part may be mounted on the wall part and/or on the first feedthrough part. This also has the effect that the cable or conduit is reliably held by the feedthrough assembly and is reliably sealed against the feedthrough assembly.

In an example, a circumference of the feedthrough channel is at least partially formed by at least one of the second component of the first feedthrough part and the second component of the second feedthrough part. As has been explained before, the second component of the first feedthrough part and the second component of the second feedthrough part have a comparatively high elasticity and therefore is well-suitable for sealing a cable or conduit being located in the feedthrough channel with respect to the first feedthrough part or with respect to the second feedthrough part respectively. Consequently, a reliable sealing with respect to noise, dust and humidity is achieved.

In an example, at least one of the first feedthrough part and the second feedthrough part comprises a holding means for a cable and/or a conduit. The holding means is integrally formed on the first feedthrough part or the second feedthrough part. Using the holding means, the cable and/or conduit may be reliably held in place. Forming the holding means integrally, e.g. when producing the first feedthrough part or the second feedthrough part using injection molding and/or an additive manufacturing technique, is a cost efficient way of production. This also allows to design the feedthrough assembly in a lightweight manner, since, due to the integral configuration, fixation parts may be eliminated.

In an example, a foam component is attached to at least one of the first feedthrough part and the second feedthrough part. An inherent characteristic of the form component is that it is soft and may be easily deformed in an elastic manner. Consequently, using the foam component, the respective feedthrough part may be reliably sealed against the wall part and/or a cable and/or a conduit.

In an example, the first feedthrough part and the second feedthrough part are connected to one another. Thus, in use, the first feedthrough part and the second feedthrough part form an interrelated unit. This allows to reliably guide the at least one cable and or the at least one conduit through the opening of the wall part.

In an example, the first feedthrough part and the second feedthrough part are connected to one another using at least one clip. Thus, the connection may be generated in a quick and simple manner. Once established, the connection is highly reliable.

In an example, the first feedthrough part has a first mounting surface for contacting a vehicle structure and the second feedthrough part has a second mounting surface for contacting the vehicle structure. At least a portion of the first mounting surface is formed by the second component of the first feedthrough part. Additionally or alternatively at least a portion of the second mounting surface is formed by the second component of the second feedthrough part. The vehicle structure may be fully or partially formed by the wall part. As has been explained before, the second component of the first feedthrough part and the second component of the second feedthrough part have a comparatively high elasticity and therefore are well-suitable for sealing the first feedthrough part and/or the second feedthrough part with respect to the vehicle structure. Consequently, a reliable sealing with respect to noise, dust and humidity is achieved.

In an example, the first mounting surface and the second mounting surface are inclined with respect to one another. This means that the first mounting surface and the second mounting surface enclose an angle being different from 0° and being different from 180°. Such a feedthrough assembly is, thus, configured to be mounted in a corner of a vehicle structure and/or on a step-shaped portion of a wall part. This has the effect, that the feedthrough assembly may be mounted in a space-saving manner.

In an example, at least one of the first feedthrough part and the second feedthrough part has a mounting hole for mounting the feedthrough assembly on a vehicle structure. Using the respective mounting hole, the feedthrough assembly may be reliably attached to the vehicle structure, e.g. the wall part.

In an example, at least one of the first feedthrough part and the second feedthrough part comprises a mounting insert forming an integral portion of the first feedthrough part or the second feedthrough part respectively. Using the mounting insert, the feedthrough assembly may be reliably mounted on the vehicle structure. Having the mounting insert integrated into the first feedthrough part of the second feedthrough part offers the possibility to produce the respective first feedthrough part or second feedthrough part in a cost-efficient manner. In other words, it is unnecessary to assemble the mounting insert to the remaining portions of the first feedthrough part or the second feedthrough part in a separate assembly step.

In an example, at least one of the first component of the first feedthrough part and the first component of the second feedthrough part comprises a polypropylene material. In this context, the first component of the first feedthrough part and/or the first component of the second feedthrough part may be made from polypropylene material. In a further example, the first component of the first feedthrough part and the first component of the second feedthrough part are made from polypropylene material. This material is mechanically stable and lightweight at the same time. Moreover, this material may be used in known and well-established manufacturing machines and processes such as injection molding. Thus, producing parts from polypropylene material may be cost-efficient.

In an example, at least one of the second component of the first feedthrough part and the second component of the second feedthrough part comprises a thermoplastic vulcanizate material. In this context, the second component of the first feedthrough part and/or the second component of the second feedthrough part may be made from a thermoplastic vulcanizate material. In a further example, the second component of the first feedthrough part and the second component of the second feedthrough part are made from a thermoplastic vulcanizate material. This material has a comparatively high elasticity and is durable and lightweight at the same time. Moreover, this material may be used in known and well-established manufacturing machines and processes such as injection molding. Thus, producing parts from polypropylene material may be cost-efficient.

It is further noted, that a polypropylene material and a thermoplastic vulcanizate material may be used in a two component (2K) injection molding process. This further increases the efficiency of production for the first feedthrough part and/or to second feedthrough part.

According to a second aspect, there is provided a partition wall assembly for separating a motor compartment of a vehicle from a passenger compartment of the vehicle. The partition wall assembly comprises a wall part having an opening and a feedthrough assembly of the present disclosure covering the opening. As has been explained before, the feedthrough assembly is mechanically stable and offers enhanced sealing abilities at the same time. This has the effect that the feedthrough assembly may reliably seal the opening of the wall part against dust, noise and humidity while at the same time guiding the at least one cable and the at least one conduit through the opening in a mechanically stable manner.

According to a third aspect, there is provided a vehicle having a partition wall of the present disclosure. In such a vehicle, the motor compartment is reliably sealed from the passenger compartment with respect to noise, dust and humidity. At the same time, at least one cable and/or at least one conduit is guided from the motor compartment to the passenger compartment or vice versa in a mechanically stable manner.

According to a fourth aspect, there is provided a method for guiding at least one cable and/or at least one conduit through an opening in a wall part of a motor compartment of a vehicle. The method comprises
- mounting the first feedthrough part of the feedthrough assembly of the present disclosure on the wall part, wherein a first portion of at least one feedthrough channel is arranged on the first feedthrough part,
- arranging the at least one cable and/or the at least one conduit in the first portion of the at least one feedthrough channel, and
- mounting the second feedthrough part of the feedthrough assembly of the present disclosure on the wall part and/or on the first feedthrough part, wherein a second portion of the at least one feedthrough channel is arranged on the second feedthrough part, such that the at least one cable and/or the at least one conduit is arranged in the second portion of the at least one feedthrough channel.

Consequently, in a situation in which the first feedthrough part is mounted on the wall part and the cable and/or the conduit is to be arranged in the feedthrough channel, there is sufficient space to handle the cable and/or conduit and move it into the first portion of the at least one feedthrough channel. This is due to the fact that the second feedthrough part is not yet mounted. Consequently, guiding the at least one cable and/or the at least one conduit through the opening of the wall is comparatively easy. At the same time, especially due to the fact that the second feedthrough part is mounted once the at least one cable and/or the at least one conduit is already placed in the first portion of the feedthrough channel, the opening is reliably sealed with respect to noise, dust and humidity via the feedthrough assembly.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawings.
- Figure 1: shows a vehicle according to the present disclosure having a partition wall assembly according to the present disclosure comprising a feedthrough assembly according to the present disclosure which may be used for performing a method for guiding at least one cable and/or at least one conduit through an opening in a wall part of a motor compartment of a vehicle,
- Figure 2: shows the partition wall assembly and the feedthrough assembly of Figure 1 in a more detailed view along direction II in Figure 1,
- Figure 3: shows the feedthrough assembly of Figure 2 in a separate view,
- Figure 4: shows a first feedthrough part of the feedthrough assembly of Figure 3 in a separate representation,
- Figure 5: shows a second feedthrough part of the feedthrough assembly of Figure 3 in a separate representation,
- Figure 6: shows the feedthrough assembly of Figure 1 in a more detailed view along direction VI in Figure 1, wherein the wall part of the partition wall assembly is not shown, and
- Figure 7: shows the feedthrough assembly of Figure 6 in a separate view.

The Figures are merely schematic representations and serve only to illustrate examples of the disclosure. Identical or equivalent elements are in principle provided with the same reference signs.

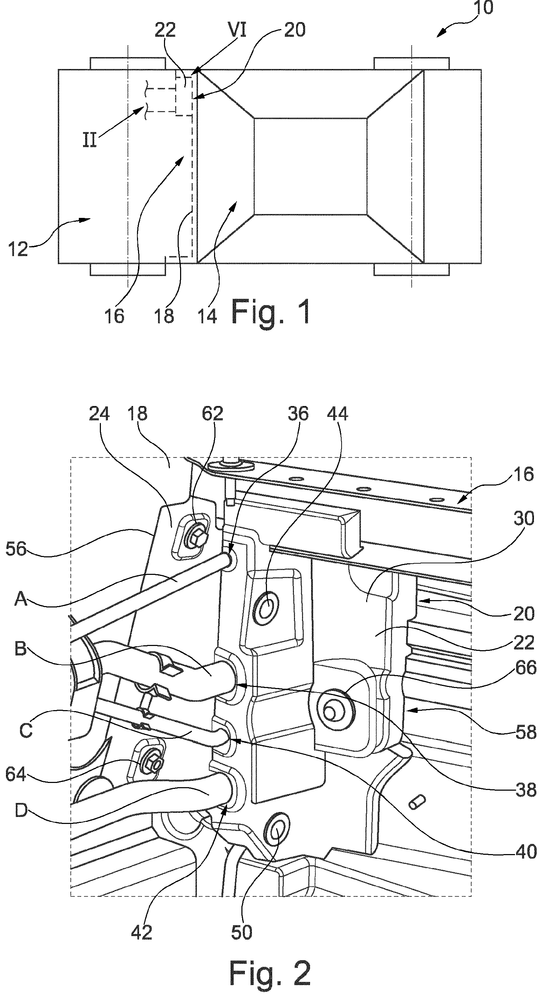

Figure 1 shows a vehicle 10 having a motor compartment 12 and a passenger compartment 14.

In the present example, the motor compartment 12 is a front motor compartment. This means that the motor compartment 12 is arranged in the front of the vehicle 10 when considering a standard forward driving direction.

A partition wall assembly 16 separates the motor compartment 12 and the passenger compartment 14.

In this context, the separation applies to noise, dust and humidity. This means that noise, dust and humidity that might be present in the motor compartment 12 must not enter the passenger compartment 14 through the partition wall assembly 16.

Nevertheless, a number of cables and conduits needs to connect devices in the motor compartment 12 and devices in the passenger compartment 14 (see also Figure 2).

In the example shown in the Figures, two cables A, C and two conduits B, D need to traverse the partition wall assembly 16.

To this end, the partition wall assembly 16 comprises a wall part 18 having an opening 20.

The cables A, C and the conduits B, D extend through the opening 20.

At the same time, a feedthrough assembly 22 covers the opening 20. This means that the feedthrough assembly 22 covers those parts of the opening 20 which are not occupied by the cables A, C and the conduits B, D.

Figure 2 shows the feedthrough assembly 22 in a mounted condition in a view along direction II in Figure 1. This view may also be called a front view.

The feedthrough assembly 22 comprises a first feedthrough part 24.

The first feedthrough part 24 is made of two components which integrally form the first feedthrough part 24.

In the present example, the first feedthrough part 24 is an injection molded part, more precisely a two component injection molded part.

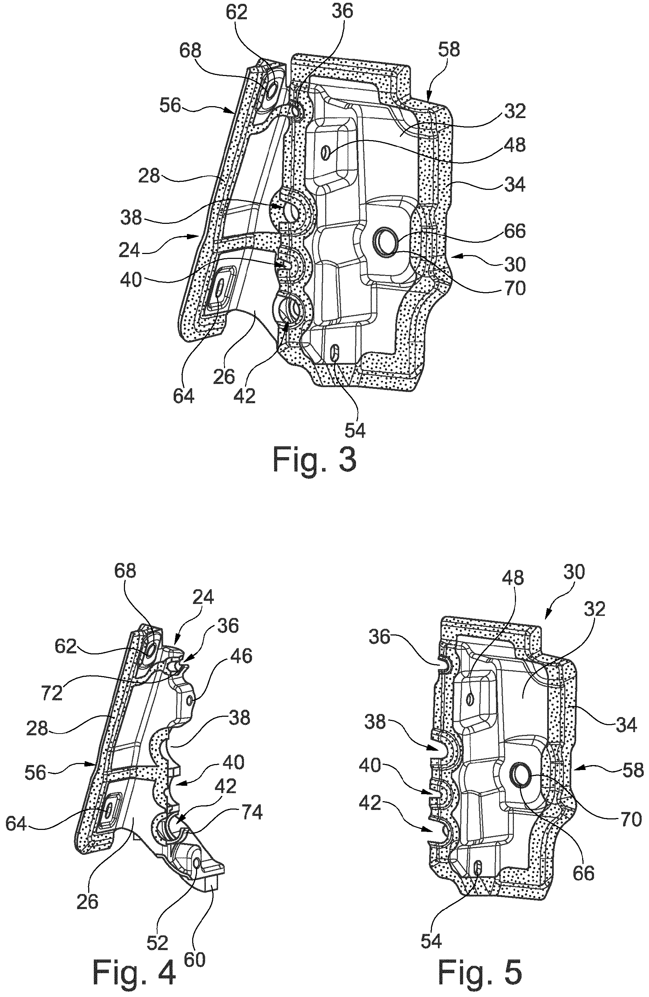

Thus, the first feedthrough part 24 comprises a first component 26 being made from a polypropylene material (cf. Figures 3 and 4).

The first feedthrough part 24 additionally comprises a second component 28 which is made from a thermoplastic vulcanizate material.

In order to be able to better distinguish the first component 26 and the second component 28 of the first feedthrough part 24, the second component 28 is marked with a pattern of dots. It is noted that the marking is done for illustrative purposes only.

Consequently, an elasticity of the second component 28 is higher than an elasticity of the first component 26.

The feedthrough assembly 22 also comprises a second feedthrough part 30 (cf. Figures 3 and 5).

The second feedthrough part 30 is also made of two components which integrally form the second feedthrough part 30.

In the present example, the second feedthrough part 30 is an injection molded part, more precisely a two component injection molded part.

Thus, the second feedthrough part 30 comprises a first component 32 being made from a polypropylene material.

The second feedthrough part 30 additionally comprises a second component 34 which is made from a thermoplastic vulcanizate material.

In order to be able to better distinguish the first component 32 and the second component 34 of the second feedthrough part 30, the second component 34 is marked with a pattern of dots. It is noted that the marking is done for illustrative purposes only.

Consequently, an elasticity of the second component 34 is higher than an elasticity of the first component 32.

The feedthrough assembly 22 is configured to guide the cables A, C and the conduits B, D through the opening 20 in the wall part 18.

To this end, the feedthrough assembly 22 comprises four feedthrough channels 36, 38, 40, 42.

In this context, feedthrough channel 36 is configured to guide cable A, feedthrough channel 38 is configured to guide conduit B, feedthrough channel 40 is configured to guide cable C, and feedthrough channel 42 is configured to guide conduit D.

Thereby, for each feedthrough channel 36, 38, 40, 42, a first circumferential section of the respective feedthrough channel 36, 38, 40, 42 is formed by the first feedthrough part 24 and a second circumferential section of the respective feedthrough channel 36, 38, 40, 42 is formed by the second feedthrough part 30.

In other words, in order to fully form each of the feedthrough channels 36, 38, 40, 42, both the first feedthrough part 24 and the second feedthrough part 30 are necessary.

Moreover, a circumference of each of the feedthrough channels 36, 38, 40, 42 is partially formed by the second component 28 of the first feedthrough part 24 and the second component 34 of the second feedthrough part 30.

This means, that thermoplastic vulcanizate material extends around a full circumference of each of the feedthrough channels 36, 38, 40, 42.

Thus, the cables A, C and the conduits B, D are reliably sealed with respect to the feedthrough assembly 22 when extending through the respective feedthrough channel 36, 38, 40, 42.

It is noted that in the mounted condition of the feedthrough assembly 22, the first feedthrough part 24 and the second feedthrough part 30 are connected to one another using a first clip 44 which extends through a first connection opening 46 on the first feedthrough part 24 and through a second connection opening 48 on the second feedthrough part 30. Additionally, the first feedthrough part 24 and the second feedthrough part 30 are connected to one another using a second clip 50 which extends through a third connection opening 52 on the first feedthrough part 24 and through a fourth connection opening 54 a on the second feedthrough part 30.

The first feedthrough part 24 additionally has a first mounting surface 56 for contacting a vehicle structure, in the present example the wall part 18.

Moreover, the second feedthrough part 30 has a second mounting surface 58 for contacting the vehicle structure, in the present example of the wall part 18.

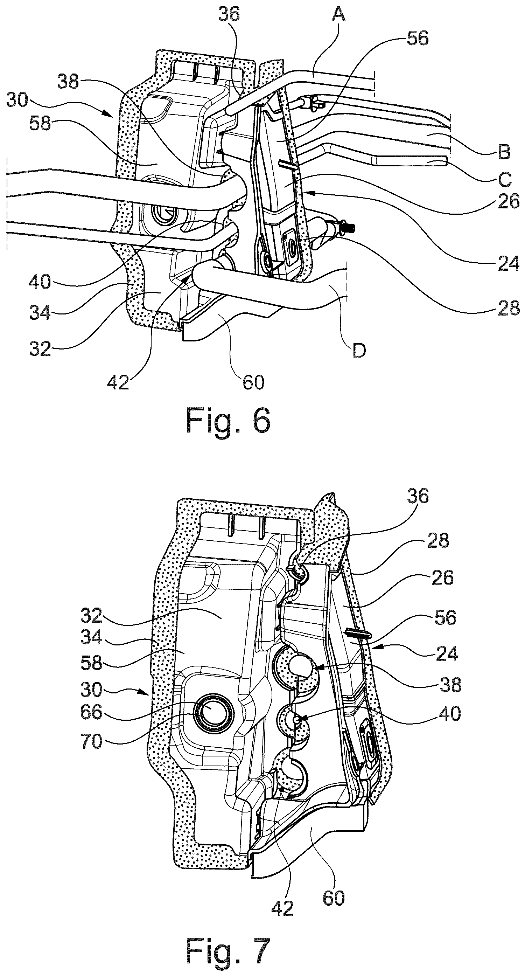

As can best be seen from figures 2 and 6, the first mounting surface 56 and the second mounting surface 58 are inclined with respect to one another, such that the feedthrough assembly 22 can be mounted in a corner portion of the wall part 18.

Beyond that, a portion of the second component 28 of the first feedthrough part 24 extends around a rim section of the first mounting surface 56. In other words, on the rim of the first mounting surface 56, thermoplastic vulcanizate material is arranged. This has the effect that the first mounting surface 56, i.e. the first feedthrough part 24 can be reliably sealed with respect to the wall part 18.

Moreover, a portion of the second component 34 of the second feedthrough part 30 extends around a rim section of the second mounting surface 58. In other words, on the rim of the second mounting surface 58, thermoplastic vulcanizate material is arranged. This has the effect that the second mounting surface 58, i.e. the second feedthrough part 30 can be reliably sealed with respect to the wall part 18. This may be seen best in Figure 6 which corresponds to a view along direction VI in Figure 1. This view may also be called a rearview of the feedthrough assembly 22.

Moreover, a foam component 60 is provided on a lower side of the first feedthrough part 24. The foam component 60 is glued to the first component 26 of the first feedthrough part 24.

The foam component 60 is used for sealing the feedthrough assembly 22 with respect to the wall part 18.

Altogether, the rim section of the first mounting surface 56, the rim section of the second mounting surface 58 and the foam component 60 together fully surround the feedthrough assembly 22 in its mounted condition. Consequently, the feedthrough assembly 22 may be reliably sealed with respect to the wall part 18.

In order to fixedly connected the feedthrough assembly 22 to the wall part 18, two mounting holes 62, 64 are provided on the first feedthrough part 24 and a further mounting hole 66 is provided on the second feedthrough part 30 (cf. Figures 3, 4 and 5).

Mounting inserts 68, 70 are arranged in mounting holes 62 and 66.

In the present example, the mounting inserts 68, 70 are metal bushings which form an integral portion of the respective first feedthrough part 24 or second feedthrough part 30. Consequently, the feedthrough assembly 22 may be reliably connected to the vehicle structure, i.e. the wall part 18.

Moreover, a first holding means 72 for holding cable is arranged adjacent to the portion of the feedthrough channel 36 being provided on the first feedthrough part 24 (cf. Figure 4).

Moreover, a second holding means 74 for holding conduit D is arranged adjacent to the portion of the feedthrough channel 42 being provided on the first feedthrough part 24.

The advantage of the first holding means 72 and the second holding means 74 will become clear in the light of the explanation of the method for guiding at least one cable A, C and/or at least one conduit B, D through an opening 20 in a wall part 18 of a motor compartment 12 of a vehicle 10.

In a first step, the first feedthrough part 24 is mounted on the wall part 18. This may be done using bolts which are put through mounting holes 62, 64.

In a second step, the cables A, C and the conduits B, D are arranged in those portions of the feedthrough channels 36, 38, 40, 42 which are arranged on the first feedthrough part 24.

In this condition, cable A may be held by the first holding means 72 and conduit D may be held by the second holding means 74.

Subsequently, in a third step, the second feedthrough part 30 is mounted on the wall part 18 and on the first feedthrough part 24.

In doing so, the feedthrough channels 36, 38, 40, 42 are completed circumferentially.

As a consequence thereof, the cables A, C and the conduits B, D are arranged in the respective feedthrough channels 36, 38, 40, 42.

Consequently, the cables A, C and conduits B, D are sealed with respect to the feedthrough assembly 22 via the thermoplastic vulcanizate material of the second component 28 of the first feedthrough part 24 and the second component 34 of the second feedthrough part 30.

Moreover, the feedthrough assembly 22 is sealed with respect to the wall part 18 via the thermoplastic vulcanizate material of the second component 28 of the first feedthrough part 24, the second component 34 of the second feedthrough part 30, and the foam component 60.

Altogether, the motor compartment 12 is reliably separated from the passenger compartment 16 with respect to noise, dust and humidity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: vehicle
- 12: motor compartment
- 14: passenger compartment
- 16: partition wall assembly
- 18: wall part
- 20: opening
- 22: feedthrough assembly
- 24: first feedthrough part
- 26: first component of the first feedthrough part
- 28: second component of the first feedthrough part
- 30: second feedthrough part
- 32: first component of the second feedthrough part
- 34: second component of the second feedthrough part
- 36: feedthrough channel
- 38: feedthrough channel
- 40: feedthrough channel
- 42: feedthrough channel
- 44: first clip
- 46: first connection opening
- 48: second connection opening
- 50: second clip
- 52: third connection opening
- 54: fourth connection opening
- 56: first mounting surface
- 58: second mounting surface
- 60: foam component
- 62: mounting hole
- 64: mounting hole
- 66: mounting hole
- 68: mounting insert
- 70: mounting insert
- 72: first holding means
- 74: second holding means

- A: cable
- B: conduit
- C: cable
- D: conduit

## Claims

1. A feedthrough assembly (22) for guiding at least one cable (A, C) and/or at least one conduit (B, D) through an opening (20) in a wall part (18) of a motor compartment (12) of a vehicle (10), comprising
a first feedthrough part (24) comprising a first component (26) and a second component (28), wherein the first component (26) and the second component (28) form an integral portion of the first feedthrough part (24), and wherein an elasticity of the second component (28) is higher than an elasticity of the first component (26),
a second feedthrough part (30) comprising a first component (32) and a second component (34), wherein the first component (32) and the second component (34) form an integral portion of the second feedthrough part (30), and wherein an elasticity of the second component (34) is higher than an elasticity of the first component (32), and
at least one feedthrough channel (36, 38, 40, 42) being arranged on at least one of the first feedthrough part (24) and the second feedthrough part (30).

2. The feedthrough assembly (22) of claim 1, wherein a first circumferential section of the at least one feedthrough channel (36, 38, 40, 42) is formed by the first feedthrough part (24) and a second circumferential section of the at least one feedthrough channel (36, 38, 40, 42) is formed by the second feedthrough part (30).

3. The feedthrough assembly (22) of claim 1 or 2, wherein a circumference of the feedthrough channel (36, 38, 40, 42) is at least partially formed by at least one of the second component (28) of the first feedthrough part (24) and the second component (34) of the second feedthrough part (30).

4. The feedthrough assembly (22) of any one of the preceding claims, wherein at least one of the first feedthrough part (24) and the second feedthrough part (30) comprises a holding means (72, 74) for a cable (A, C) and/or a conduit (B, D), wherein the holding means (72, 74) is integrally formed on the first feedthrough part (24) or the second feedthrough part (30) respectively.

5. The feedthrough assembly (22) of any one of the preceding claims, wherein a foam component (60) is attached to at least one of the first feedthrough part (24) and the second feedthrough part (30).

6. The feedthrough assembly (22) of any one of the preceding claims, wherein the first feedthrough part (24) and the second feedthrough part (30) are connected to one another.

7. The feedthrough assembly (22) of any one of the preceding claims, wherein the first feedthrough part (24) has a first mounting surface (56) for contacting a vehicle structure and the second feedthrough part (30) has a second mounting surface (58) for contacting the vehicle structure,
wherein at least a portion of the first mounting surface (56) is formed by the second component (28) of the first feedthrough part (24) and/or wherein at least a portion of the second mounting surface (58) is formed by the second component (34) of the second feedthrough part (30).

8. The feedthrough assembly (22) of claim 7, wherein the first mounting surface (56) and the second mounting surface (58) are inclined with respect to one another.

9. The feedthrough assembly (22) of any one of the preceding claims, wherein at least one of the first feedthrough part (24) and the second feedthrough part (30) has a mounting hole (62, 64, 66) for mounting the feedthrough assembly (22) on a vehicle structure.

10. The feedthrough assembly (22) of any one of the preceding claims, wherein at least one of the first feedthrough part (24) and the second feedthrough part (30) comprises a mounting insert (68, 70) forming an integral portion of the first feedthrough part (24) or the second feedthrough part (30) respectively.

11. The feedthrough assembly (22) of any one of the preceding claims, wherein at least one of the first component (26) of the first feedthrough part (24) and the first component (32) of the second feedthrough part (30) comprises a polypropylene material.

12. The feedthrough assembly (22) of any one of the preceding claims, wherein at least one of the second component (28) of the first feedthrough part (24) and the second component (34) of the second feedthrough part (30) comprises a thermoplastic vulcanizate material.

13. A partition wall assembly (16) for separating a motor compartment (12) of a vehicle (10) from a passenger compartment (14) of the vehicle (10), comprising a wall part (18) having an opening (20) and a feedthrough assembly (22) of any one of the preceding claims covering the opening (20).

14. A vehicle (10) having a partition wall assembly (16) of claim 13.

15. A method for guiding at least one cable (A, C) and/or at least one conduit (B, D) through an opening (20) in a wall part (18) of a motor compartment (12) of a vehicle (10), comprising
- mounting the first feedthrough part (24) of the feedthrough assembly (22) of any one of claims 1 to 12 on the wall part (18), wherein a first portion of at least one feedthrough channel (36, 38, 40, 42) is arranged on the first feedthrough part (24),
- arranging the at least one cable (A, C) and/or the at least one conduit (B, D) in the first portion of the at least one feedthrough channel (36, 38, 40, 42), and
- mounting the second feedthrough part (30) of the feedthrough assembly (22) of any one of claims 1 to 12 on the wall part (18) and/or on the first feedthrough part (24), wherein a second portion of the at least one feedthrough channel (36, 38, 40, 42) is arranged on the second feedthrough part (30), such that the at least one cable (A, C) and/or the at least one conduit (B, D) is arranged in the second portion of the at least one feedthrough channel (36, 38, 40, 42).

## Patentansprüche

1. Durchführungsanordnung (22) zum Führen mindestens eines Kabels (A, C) und/oder mindestens einer Rohrleitung (B, D) durch eine Öffnung (20) in einem Wandteil (18) eines Motorraums (12) eines Fahrzeugs (10), umfassend:
einen ersten Durchführungsteil (24), umfassend eine erste Komponente (26) und eine zweite Komponente (28), wobei die erste Komponente (26) und die zweite Komponente (28) einen integralen Abschnitt des ersten Durchführungsteils (24) bilden, und wobei eine Elastizität der zweiten Komponente (28) höher ist als eine Elastizität der ersten Komponente (26),
einen zweiten Durchführungsteil (30), umfassend eine erste Komponente (32) und eine zweite Komponente (34), wobei die erste Komponente (32) und die zweite Komponente (34) einen integralen Abschnitt des zweiten Durchführungsteils (30) bilden, und wobei eine Elastizität der zweiten Komponente (34) höher ist als eine Elastizität der ersten Komponente (32), und
mindestens einen Durchführungskanal (36, 38, 40, 42), der an mindestens einem des ersten Durchführungsteils (24) und des zweiten Durchführungsteil (30) angeordnet ist.

2. Durchführungsanordnung (22) nach Anspruch 1, wobei eine erste Umfangssektion des mindestens einen Durchführungskanals (36, 38, 40, 42) von dem ersten Durchführungsteil (24) gebildet ist und eine zweite Umfangssektion des mindestens einen Durchführungskanals (36, 38, 40, 42) von dem zweiten Durchführungsteil (30) gebildet ist.

3. Durchführungsanordnung (22) nach Anspruch 1 oder 2, wobei ein Umfang des Durchführungskanals (36, 38, 40, 42) mindestens teilweise von mindestens einer der zweiten Komponente (28) des ersten Durchführungsteils (24) und der zweiten Komponente (34) des zweiten Durchführungsteils (30) gebildet ist.

4. Durchführungsanordnung (22) nach einem der vorangehenden Ansprüche, wobei mindestens eines des ersten Durchführungsteils (24) und des zweiten Durchführungsteils (30) Haltemittel (72, 74) für ein Kabel (A, C) und/oder eine Rohrleitung (B, D) umfasst, wobei die Haltemittel (72, 74) integral an dem ersten Durchführungsteil (24) bzw. dem zweiten Durchführungsteil (30) gebildet sind.

5. Durchführungsanordnung (22) nach einem der vorangehenden Ansprüche, wobei eine Schaumstoffkomponente (60) an mindestens einem des ersten Durchführungsteils (24) und des zweiten Durchführungsteils (30) angebracht ist.

6. Durchführungsanordnung (22) nach einem der vorangehenden Ansprüche, wobei der erste Durchführungsteil (24) und der zweite Durchführungsteil (30) miteinander verbunden sind.

7. Durchführungsanordnung (22) nach einem der vorangehenden Ansprüche, wobei der erste Durchführungsteil (24) eine erste Montagefläche (56) zum Kontaktieren einer Fahrzeugstruktur aufweist und der zweite Durchführungsteil (30) eine zweite Montagefläche (58) zum Kontaktieren der Fahrzeugstruktur aufweist,
wobei mindestens ein Abschnitt der ersten Montagefläche (56) von der zweiten Komponente (28) des ersten Durchführungsteils (24) gebildet ist und/oder wobei mindestens ein Abschnitt der zweiten Montagefläche (58) von der zweiten Komponente (34) des zweiten Durchführungsteils (30) gebildet ist.

8. Durchführungsanordnung (22) nach Anspruch 7, wobei die erste Montagefläche (56) und die zweite Montagefläche (58) in Bezug aufeinander geneigt sind.

9. Durchführungsanordnung (22) nach einem der vorangehenden Ansprüche, wobei mindestens einer des ersten Durchführungsteils (24) und des zweiten Durchführungsteils (30) ein Montageloch (62, 64, 66) zum Montieren der Durchführungsanordnung (22) an einer Fahrzeugstruktur aufweist.

10. Durchführungsanordnung (22) nach einem der vorangehenden Ansprüche, wobei mindestens einer des ersten Durchführungsteils (24) und des zweiten Durchführungsteils (30) einen Montageeinsatz (68, 70) umfasst, der einen integralen Abschnitt des ersten Durchführungsteils (24) bzw. des zweiten Durchführungsteils (30) bildet.

11. Durchführungsanordnung (22) nach einem der vorangehenden Ansprüche, wobei mindestens eine der ersten Komponente (26) des ersten Durchführungsteils (24) und der ersten Komponente (32) des zweiten Durchführungsteils (30) ein Polypropylenmaterial umfasst.

12. Durchführungsanordnung (22) nach einem der vorangehenden Ansprüche, wobei mindestens eine der zweiten Komponente (28) des ersten Durchführungsteils (24) und der zweiten Komponente (34) des zweiten Durchführungsteils (30) ein thermoplastisches Vulkanisatmaterial umfasst.

13. Trennwandanordnung (16) zum Trennen eines Motorraums (12) eines Fahrzeugs (10) von einem Fahrgastraum (14) des Fahrzeugs (10), umfassend einen Wandteil (18) mit einer Öffnung (20) und einer die Öffnung (20) bedeckenden Durchführungsanordnung (22) nach einem der vorangehenden Ansprüche.

14. Fahrzeug (10), aufweisend eine Trennwandanordnung (16) nach Anspruch 13.

15. Verfahren zum Führen mindestens eines Kabels (A, C) und/oder mindestens einer Rohrleitung (B, D) durch eine Öffnung (20) in einem Wandteil (18) eines Motorraums (12) eines Fahrzeugs (10), umfassend:
- Montieren des ersten Durchführungsteils (24) der Durchführungsanordnung (22) nach einem der Ansprüche 1 bis 12 an dem Wandteil (18), wobei ein erster Abschnitt mindestens eines Durchführungskanals (36, 38, 40, 42) an dem ersten Durchführungsteil (24) angeordnet ist,
- Anordnen des mindestens einen Kabels (A, C) und/oder der mindestens einen Rohrleitung (B, D) in dem ersten Abschnitt des mindestens einen Durchführungskanals (36, 38, 40, 42), und
- Montieren des zweiten Durchführungsteils (30) der Durchführungsanordnung (22) nach einem der Ansprüche 1 bis 12 an dem Wandteil (18) und/oder an dem ersten Durchführungsteil (24), wobei ein zweiter Abschnitt des mindestens einen Durchführungskanals (36, 38, 40, 42) an dem zweiten Durchführungsteil (30) so angeordnet ist, dass das mindestens eine Kabel (A, C) und/oder die mindestens eine Rohrleitung (B, D) in dem zweiten Abschnitt des mindestens einen Durchführungskanals (36, 38, 40, 42) angeordnet sind.

## Revendications

1. Ensemble de passage (22) destiné à guider au moins un câble (A, C) et/ou au moins une conduite (B, D) à travers une ouverture (20) dans une partie de paroi (18) d'un compartiment moteur (12) d'un véhicule (10), comprenant :
une première partie de passage (24) comprenant un premier composant (26) et un second composant (28), dans lequel le premier composant (26) et le second composant (28) forment une portion d'un seul tenant de la première partie de passage (24), et dans lequel une élasticité du second composant (28) est supérieure à une élasticité du premier composant (26),
une seconde partie de passage (30) comprenant un premier composant (32) et un second composant (34), dans lequel le premier composant (32) et le second composant (34) forment une portion d'un seul tenant de la seconde partie de passage (30), et dans lequel une élasticité du second composant (34) est supérieure à une élasticité du premier composant (32), et
au moins un canal de passage (36, 38, 40, 42) étant agencé sur au moins une parmi la première partie de passage (24) et la seconde partie de passage (30).

2. Ensemble de passage (22) selon la revendication 1, dans lequel une première section circonférentielle du au moins un canal de passage (36, 38, 40, 42) est formée par la première partie de passage (24) et une seconde section circonférentielle du au moins un canal de passage (36, 38, 40, 42) est formée par la seconde partie de passage (30).

3. Ensemble de passage (22) selon la revendication 1 ou 2, dans lequel une circonférence du canal de passage (36, 38, 40, 42) est au moins partiellement formée par au moins un parmi le second composant (28) de la première partie de passage (24) et le second composant (34) de la seconde partie de passage (30).

4. Ensemble de passage (22) selon l'une quelconque des revendications précédentes, dans lequel au moins une parmi la première partie de passage (24) et la seconde partie de passage (30) comprend des moyens de maintien (72, 74) pour un câble (A, C) et/ou une conduite (B, D), dans lequel les moyens de maintien (72, 74) sont formés d'un seul tenant sur la première partie de passage (24) ou la seconde partie de passage (30) respectivement.

5. Ensemble de passage (22) selon l'une quelconque des revendications précédentes, dans lequel un composant en mousse (60) est fixé à au moins une parmi la première partie de passage (24) et la seconde partie de passage (30).

6. Ensemble de passage (22) selon l'une quelconque des revendications précédentes, dans lequel la première partie de passage (24) et la seconde partie de passage (30) sont reliées l'une à l'autre.

7. Ensemble de passage (22) selon l'une quelconque des revendications précédentes, dans lequel la première partie de passage (24) comporte une première surface de montage (56) pour entrer en contact avec une structure de véhicule et la seconde partie de passage (30) comporte une seconde surface de montage (58) pour entrer en contact avec la structure de véhicule,
dans lequel au moins une portion de la première surface de montage (56) est formée par le second composant (28) de la première partie de passage (24) et/ou dans lequel au moins une portion de la seconde surface de montage (58) est formée par le second composant (34) de la seconde partie de passage (30).

8. Ensemble de passage (22) selon la revendication 7, dans lequel la première surface de montage (56) et la seconde surface de montage (58) sont inclinées l'une par rapport à l'autre.

9. Ensemble de passage (22) selon l'une quelconque des revendications précédentes, dans lequel au moins une parmi la première partie de passage (24) et la seconde partie de passage (30) comporte un trou de montage (62, 64, 66) pour monter l'ensemble de passage (22) sur une structure de véhicule.

10. Ensemble de passage (22) selon l'une quelconque des revendications précédentes, dans lequel au moins une parmi la première partie de passage (24) et la seconde partie de passage (30) comprend un insert de montage (68, 70) formant une portion d'un seul tenant de la première partie de passage (24) ou de la seconde partie de passage (30) respectivement.

11. Ensemble de passage (22) selon l'une quelconque des revendications précédentes, dans lequel au moins un parmi le premier composant (26) de la première partie de passage (24) et le premier composant (32) de la seconde partie de passage (30) comprend un matériau polypropylène.

12. Ensemble de passage (22) selon l'une quelconque des revendications précédentes, dans lequel au moins un parmi le second composant (28) de la première partie de passage (24) et le second composant (34) de la seconde partie de passage (30) comprend une matière vulcanisée thermoplastique.

13. Ensemble de cloison de séparation (16) pour séparer un compartiment moteur (12) d'un véhicule (10) d'un habitacle passagers (14) du véhicule (10), comprenant une partie de paroi (18) ayant une ouverture (20) et un ensemble de passage (22) selon l'une quelconque des revendications précédentes recouvrant l'ouverture (20).

14. Véhicule (10) ayant un ensemble de cloison de séparation (16) selon la revendication 13.

15. Procédé pour guider au moins un câble (A, C) et/ou au moins une conduite (B, D) à travers une ouverture (20) dans une partie de paroi (18) d'un compartiment moteur (12) d'un véhicule (10), comprenant de :
- monter la première partie de passage (24) de l'ensemble de passage (22) selon l'une quelconque des revendications 1 à 12 sur la partie de paroi (18), dans lequel une première portion d'au moins un canal de passage (36, 38, 40, 42) est agencée sur la première partie de passage (24),
- agencer le au moins un câble (A, C) et/ou le au moins une conduite (B, D) dans la première portion du au moins un canal de passage (36, 38, 40, 42), et
- monter la seconde partie de passage (30) de l'ensemble de passage (22) selon l'une quelconque des revendications 1 à 12 sur la partie de paroi (18) et/ou sur la première partie de passage (24), dans lequel une seconde portion du au moins un canal de passage (36, 38, 40, 42) est agencée sur la seconde partie de passage (30), de telle sorte que le au moins un câble (A, C) et/ou le au moins une conduite (B, D) est agencé dans la seconde portion du au moins un canal de passage (36, 38, 40, 42).
